# EUROPÄISCHE PATENTSCHRIFT

(11) **EP 1 407 653 B1**
(45) Veröffentlichungstag und Bekanntmachung des Hinweises auf die Patenterteilung: **21.03.2007**
(21) Anmeldenummer: 03019435.1
(22) Anmeldetag: 28.08.2003
(51) Int. Cl.: A01D 43/08, A01F 29/20, A01F 29/04, A01D 34/54, A01D 34/74, A01D 41/14, A01B 63/32

(54) **Vorrichtung zum Regeln der Position eines Anbaugeräts relativ zu einem Trägerfahrzeug**
Device for adjusting the position of an implement relativ to the supporting vehicle
Dispositif pour l'ajustement de la position d'un outil de travail par rapport à un véhicule porteur

(30) Priorität: 10.10.2002 DE 10247273
(43) Veröffentlichungstag der Anmeldung: 14.04.2004
(73) Patentinhaber: GKN Walterscheid GmbH, 53797 Lohmar (DE)
(72) Erfinder: Ochsenknecht, Daniel, 53721 Siegburg (DE); Coenen, Karl, 53721 Siegburg (DE); Grimsel, Matthias Dr., 01277 Dresden (DE)
(74) Vertreter: Müller, Thomas Michael

(56) Entgegenhaltungen:
- DE-A1- 10 011 499
- FR-A- 1 567 183
- US-A- 4 193 250
- US-A- 4 641 490

## Beschreibung

Die Erfindung betrifft eine Vorrichtung zum Regeln der Position eines Arbeitgeräts relativ zu einem Trägerfahrzeug, insbesondere einem Traktor. Die Regelung der Position des Arbeitsgeräts ist zur Bodenkopierung erforderlich, bei der verhindert werden soll, dass das Arbeitsgerät, welches vom Traktor über einen Boden mit einer unebenen Bodenkontur bewegt wird, vom Boden abhebt oder mit einer zu großen Auflagekraft auf den Boden gedrückt wird.

Bekannte Systeme für eine Bodenkopierung sehen zum Beispiel einen Tragrahmen vor, der an einer Dreipunktkupplung eines Traktors angebaut ist. Der Tragrahmen nimmt ein Arbeitsgerät zum Beispiel in Form eines Mähwerks auf, wobei das Mähwerk über mehrere Lenker mit dem Tragrahmen verbunden ist. Die Lenker sind in Form eines Parallelogramms angeordnet, so dass das Arbeitsgerät beim Überfahren des Bodens gegenüber dem Tragrahmen angehoben oder abgesenkt wird. Das gerät liegt hierbei frei auf dem Boden auf, wobei eine Federanordnung für eine Reduzierung der Auflagekräfte sorgt. Die Arbeitsgeräte sind hierbei in der Regel zwischen zwei maximalen Auslenkungen, d.h. zwischen zwei Anschlägen bewegbar. Bei extremen Höhenunterschieden des Verlaufs des Bodens ist es daher möglich, dass das Arbeitsgerät bis zum Erreichen des oberen Anschlags angehoben wird. In dieser Situation muss der gesamte Tragrahmen manuell über die Dreipunktkupplung angehoben werden, um eine Beschädigung des Arbeitsgeräts zu vermeiden.

Neben den vorgenannten passiven Bodenkopiersystemen sind aktive Systeme bekannt, bei denen die Bodenkontur über Sensoren ermittelt wird, um in Abhängigkeit von den ermittelten Daten das Arbeitsgerät anzuheben oder abzusenken. Ein solches System ist aus der DE 100 11 499 A1 bekannt. Diese zeigt eine Vorrichtung zur Bodenkopierung für Vorsatzgeräte an Mähdreschern und Feldhäckslern. An dem Vorsatzgerät ist ein schwenkbeweglicher Halmteiler vorgesehen, dessen Schwenkstellung relativ zum Vorsatzgerät mittels eines Sensors ermittelt wird. In Abhängigkeit von dem gemessenen Schwenkwinkel wird das hinter dem Halmteiler befindliche Vorsatzgerät hydraulisch angehoben oder abgesenkt. Der Nachteil besteht jedoch darin, dass aufgrund des zeitverzögerten Regelverhaltens eines Hydrauliksystems der Sensor in Arbeitsrichtung betrachtet möglichst weit vor dem Vorsatzgerät angeordnet sein muss, damit auch bei höheren Fahrgeschwindigkeiten das Vorsatzgerät früh genug angesteuert werden kann, um eine exakte Bodenkopierung zu gewährleisten. Weitere ähnliche aktive Systeme sind aus US 4 641 490, US 4 193 250 und FR 1 5767 183 bekannt.

Aufgabe der vorliegenden Erfindung ist es, eine Vorrichtung zum Regeln der Position eines Arbeitsgeräts relativ zu einem Trägerfahrzeug bereitzustellen, bei dem eine Bodenkopierung mit geringer Zeitverzögerung ermöglicht wird und bei dem auch große Höhenunterschiede ausgeglichen werden können.

Die Aufgabe wird erfindungsgemäß durch eine Vorrichtung zum Regeln der Position eines Arbeitsgeräts relativ zu einem Trägerfahrzeug, insbesondere einem Traktor, umfassend
- das Arbeitsgerät,
   - das in einer Arbeitsrichtung in vorbestimmter Höhe dem Boden folgend von dem Trägerfahrzeug über den Boden bewegbar ist,
- ein Tragelement,
   - an das das Arbeitsgerät angekoppelt ist und
   - das an das Trägerfahrzeug anbaubar ist,
- eine Kuppelvorrichtung,
   - mittels der das Arbeitsgerät mit dem Tragelement verbunden ist und
   - mittels der sich das Arbeitsgerät in Abhängigkeit von dem Höhenverlauf des Bodens vertikal frei in seiner entsprechenden Hubstellung relativ zum Tragelement einstellt,
- eine Anbauvorrichtung,
   - mittels der das Tragelement an das Trägerfahrzeug anbaubar ist und die eine Hubvorrichtung zum Anheben und Absenken des Tragelements aufweist,
- einen Sensor,
   - der die jeweilige Ist-Hubstellung des Arbeitgeräts relativ zum Tragelement ermittelt, sowie
- eine Regeleinrichtung,
   - die die Abweichung der Ist-Hubstellung von einer vorbestimmten Soll-Hubstellung des Arbeitsgeräts relativ zum Trageelement ermittelt und die mittels der Hubvorrichtung das Tragelement zu einer Höhenposition steuert, in der das Arbeitsgerät die Soll-Hubstellung einnimmt,
gelöst.

Für die Bodenkopierung sind somit zwei Vorrichtungen vorgesehen. Zum einen die Kuppelvorrichtung, welche es ermöglicht, dass sich das Arbeitsgerät relativ zum Tragelement frei einstellt. Es handelt sich hierbei um ein passives System, in das nicht aktiv eingegriffen wird. Zum anderen ist die Anbauvorrichtung vorgesehen, mittels derer die Höhenposition des Tragelements aktiv mittels der Hubvorrichtung eingestellt werden kann. Die Höhenposition des Tragelements wird in Abhängigkeit der Hubstellung des Arbeitsgeräts relativ zum Tragelement eingestellt. Somit wird das aktive System, d.h. die Anbauvorrichtung, durch die Bewegung des passiven Systems, d.h. die Kuppelvorrichtung, bestimmt.

Die Kuppelvorrichtung gewährleistet im Bereich geringer Höhenunterschiede des Höhenverlaufs des Bodens eine schnelle Anpassung der Stellung des Arbeitsgerätes ohne Zeitverzögerung. Da jedoch in der Regel mechanische Anschläge vorgesehen sind, die die Bewegung des Arbeitsgeräts gegenüber dem Tragelement einschränken, wird die freie Einstellung durch die Kuppelvorrichtung durch eine aktive Einstellung der Anbauvorrichtung überlagert, um auch größere Höhenunterschiede ausgleichen zu können.

Das Arbeitsgerät kann mit einer Gleitfläche auf dem Boden aufliegen und gleitend über diesen bewegbar sein, wie dies beispielsweise bei einem Mähwerk der Fall ist. Ferner kann das Arbeitsgerät Räder aufweisen, mit denen es auf dem Boden abrollt.

Für den Fall, dass ein Mähwerk zum Einsatz kommt, das gleitend über den Boden bewegt wird, kann zur Einstellung der Auflagekraft des Arbeitsgeräts auf dem Boden eine Federanordnung vorgesehen sein, welche das Arbeitsgerät im Hubsinne mit Kraft beaufschlagt.

Die Kuppelvorrichtung kann mindestens einen Arm aufweisen, der einerseits gelenkig mit dem Tragelement und andererseits gelenkig mit dem Arbeitsgerät verbunden ist. Der Sensor umfasst hierbei einen Winkelsensor, der die Winkelstellung des Arms relativ zum Tragelement ermittelt. Denkbar sind auch Kuppelvorrichtungen, bei denen mehrere Arme vorgesehen sind, um vorbestimmte kinematische Bewegungsabläufe zu ermöglichen.

Die Anbauvorrichtung kann durch einen Dreipunktkupplung mit zwei Unterlenkern und einem Oberlenker dargestellt sein. Es kann vorgesehen sein, dass die beiden Unterlenker durch jeweils eine Hubvorrichtung unabhängig voneinander angehoben oder abgesenkt werden. Der Oberlenker kann darüber hinaus in Hinsicht seiner Länge frei einstellbar sein. Es sind jedoch auch andere Anbauvorrichtungen möglich, wie z. B. Vierpunktkupplungen.

Um auch ein Querkopieren zu ermöglichen, ist vorzusehen, dass das Arbeitsgerät in Abhängigkeit von dem Verlauf des Bodens quer zur Arbeitsrichtung frei zum Tragelement um eine Rollachse, welche in Arbeitsrichtung ausgerichtet ist, schwenkbar ist.

Hierbei kann die freie Einstellbarkeit des Arbeitsgerätes um die Rollachse durch eine aktive Einstellung der Anbauvorrichtung überlagert werden. Hierzu ist vorzusehen, dass ein Rollwinkelsensor vorgesehen ist, der die Ist-Rollwinkelstellung des Arbeitsgeräts relativ zum Tragelement ermittelt, und dass die Regeleinrichtung die Abweichung der Ist-Rollwinkelstellung von einer vorbestimmten Soll-Rollwinkelstellung des Arbeitsgeräts ermittelt und mittels der Hubvorrichtung die Unterlenker jeweils in eine voneinander unabhängige Höhenposition steuert, in der das Tragelement eine Stellung einnimmt, in der das Arbeitsgerät die Soll-Rollwinkelstellung einnimmt.
Das Arbeitsgerät kann um eine Achse koaxial zur Rollachse verschwenkbar sein. Ferner kann die Kuppelvorrichtung zwei Arme aufweisen, die jeweils einerseits gelenkig mit dem Tragelement und andererseits gelenkig mit dem Arbeitsgerät verbunden sind. Hierbei umfasst der Rollwinkelsensor zwei Winkelsensoren, die jeweils die Winkelstellung eines Arms relativ zum Tragelement ermitteln.

Ferner kann das Arbeitsgerät in Abhängigkeit von dem Verlauf des Bodens frei zum Tragarm um eine Nickachse, welche quer zur Arbeitsrichtung ausgerichtet ist, schwenkbar sein. Somit ist bei der Verwendung eines Mähwerks als Arbeitsgerät der Schnittwinkel einstellbar.

Hierbei kann ein Nickwinkelsensor vorgesehen sein, der die Ist-Nickwinkelstellung des Arbeitsgeräts relativ zum Tragelement ermittelt. Die Regeleinrichtung ermittelt die Abweichung der Ist-Nickwinkelstellung von einer vorbestimmten Soll-Nickwinkelstellung des Arbeitsgeräts. Mittels einer Vorrichtung zum Einstellen der Länge des Oberlenkers wird das Tragelement zu einer Stellung gesteuert, in der das Arbeitsgerät die Soll-Nickwinkelstellung einnimmt.

Ferner wird zur Lösung der Aufgabe eine Arbeitsmaschine mit mindestens zwei der vorgenannten Vorrichtungen vorgeschlagen, wobei die Arbeitsgeräte der Vorrichtungen in Arbeitsrichtung betrachtet hintereinander angeordnet und die Regeleinrichtungen der Vorrichtungen miteinander derart verbunden sind, dass ein Signal, welches der Ist-Hubstellung des in Arbeitsrichtung vordersten Arbeitsgeräts entspricht, an die Regeleinrichtungen der dahinter angeordneten Vorrichtungen spricht, an die Regeleinrichtungen der dahinter angeordneten Vorrichtungen geleitet wird.

Ferner kann vorgesehen sein, dass die Regeleinrichtungen der Vorrichtungen miteinander derart verbunden sind, dass ein Signal, welches der Ist-Rollwinkelstellung des in Arbeitsrichtung vordersten Arbeitsgeräts entspricht, an die Regeleinrichtungen der dahinter angeordneten Vorrichtungen geleitet wird.

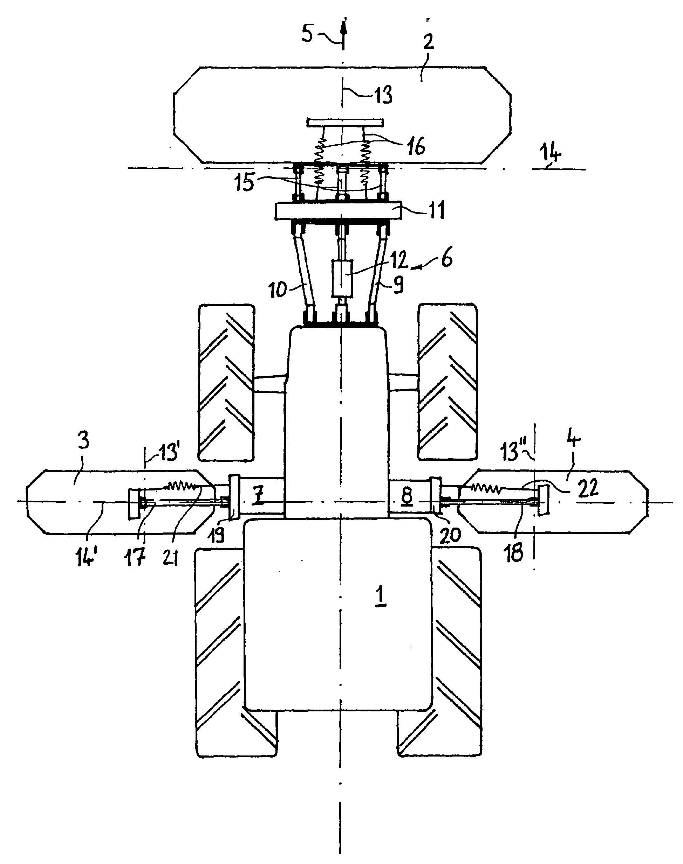

Darüber hinaus kann vorgesehen sein, dass die Regeleinrichtungen der Vorrichtungen miteinander derart verbunden sind, dass ein Signal, welches der Ist-Nickwinkelstellung des in Arbeitsrichtung vordersten Arbeitsgeräts entspricht, an die Regeleinrichtungen der dahinter angeordneten Vorrichtungen geleitet wird.
Ein bevorzugtes Ausführungsbeispiel wird anhand der Zeichnung näher erläutert.

Die Figur zeigt ein Trägerfahrzeug in Form eines landwirtschaftlichen Schleppers 1, welches in einer Arbeitsrichtung 5 verfahren wird. Mit dem Trägerfahrzeug 1 sind ein erstes Arbeitsgerät 2, ein zweites 3 sowie ein drittes Arbeitsgerät 4 verbunden. Die Arbeitsgeräte 2, 3, 4 sind in einer vorbestimmten Höhe über dem Boden angeordnet und folgen dem Höhenverlauf des Bodens. Bei den Arbeitsgeräten 2, 3, 4 kann es sich um Mähwerke handeln, welche auf dem Boden aufliegen und gleitend über den Boden bewegt werden.

Das erste Arbeitsgerät 2 ist frontseitig am Schlepper 1 über eine erste Anbauvorrichtung 6 mit dem Schlepper 1 verbunden. Das zweite Arbeitsgerät 3 ist über eine zweite Anbauvorrichtung 7 und das dritte Arbeitsgerät 4 über eine dritte Anbauvorrichtung 8 mit dem Schlepper 1 verbunden.

Die erste Anbauvorrichtung 6 ist in Form einer Dreipunktkupplung dargestellt und weist zwei Unterlenker 9, 10 sowie einen Oberlenker 12 auf. Die Unterlenker 9, 10 sowie der Oberlenker 12 sind jeweils gelenkig mit dem Schlepper 1 und gelenkig mit einem ersten Tragelement 11 verbunden. Die Unterlenker 9, 10 sind mittels Hubvorrichtungen unabhängig voneinander anhebbar und absenkbar. Somit lässt sich die Höhenposition des ersten Tragelements 11 gegenüber dem Schlepper 1 und somit über dem Boden einstellen. Ferner lässt sich durch unterschiedliche Hubstellungen der Unterlenker 9, 10 das erste Tragelement 11 um eine Rollachse 13 schwenken, wobei die Rollachse 13 in Arbeitsrichtung 6 ausgerichtet ist.

Der Oberlenker 12 ist als doppelt wirkender Hydraulikzylinder ausgebildet, dessen Länge frei einstellbar ist. Somit lässt sich das erste Tragelement 11 zudem um eine Nickachse 14, welche quer zur Arbeitsrichtung 6 angeordnet ist, verschwenken.

Mit dem ersten Tragelement 11 ist das erste Arbeitsgerät 2 über erste Arme 15, welche Bestandteil einer ersten Kuppelvorrichtung sind, beweglich verbunden. Die ersten Arme 15 können eine Hubbewegung des ersten Arbeitsgerätes 2 relativ zum ersten Tragelement 11 sowie eine Rollbewegung um die Rollachse 13 und eine Nickbewegung um die Nickachse 14 erlauben. Hierzu sind die ersten Arme 15 jeweils sowohl gelenkig am ersten Tragelement 11 als auch gelenkig mit dem ersten Arbeitsgerät 2 verbunden, so dass das erste Arbeitsgerät 2 frei zum ersten Tragelement 11 in Abhängigkeit von dem Höhenverlauf des Bodens bewegbar ist. Um die Auflagekraft des ersten Arbeitsgeräts 2 auf dem Boden einstellen zu können, ist eine erste Federanordnung 16 vorgesehen, die einerseits am ersten Arbeitsgerät 2 und andererseits am ersten Tragelement 11 befestigt ist und das erste Arbeitsgerät 2 im Hubsinne mit Kraft beaufschlagt.

An einer Seite des Schleppers 1 ist das zweite Arbeitsgerät 3 über einen zweiten Arm 17 mit einem zweiten Tragelement 19 verbunden, wobei das zweite Tragelement 19 wiederum über die zweite Anbauvorrichtung 7 mit dem Schlepper 1 verbunden ist. Hierbei ist der zweite Arm 17 Bestandteil einer zweiten Kuppelvorrichtung. Zur Einstellung der Auflagekraft des zweiten Arbeitsgeräts 3 auf dem Boden ist eine zweite Federanordnung 21 vorgesehen, welche einerseits mit dem zweiten Tragelement 19 und andererseits mit dem zweiten Arbeitsgerät 3 verbunden ist, wobei letzteres im Hubsinn mit Kraft beaufschlagt ist.

An der anderen Seite des Schleppers 1 ist das dritte Arbeitsgerät 4 über einen dritten Arm 18 mit einem dritten Tragelement 20 verbunden, wobei das dritte Tragelement 20 wiederum über die dritte Anbauvorrichtung 8 mit dem Schlepper 1 verbunden ist, wobei der dritte Arm 18 Bestandteil einer dritten Kuppelvorrichtung ist. Zur Einstellung der Auflagekraft des dritten Arbeitsgerätes 4 ist, wie beim zweiten Arbeitsgerät 3, eine dritte Federanordnung 22 vorgesehen.

Zwischen den ersten Armen 15 und dem ersten Tragelement 11 sind Winkelsensoren vorgesehen, die die Winkelstellung der ersten Arme 15 relativ zum ersten Tragelement 11 messen. Diese spiegeln die Hubstellung des ersten Arbeitsgeräts 2 relativ zum ersten Tragelement 11 wieder. Um große Ausschläge des ersten Arbeitsgeräts 2 relativ zum ersten Tragelement 11 zu vermeiden, werden in Abhängigkeit von der jeweiligen Ist-Hubstellung des ersten Arbeitsgeräts 2 relativ zum ersten Tragelement 11 die Unterlenker 9, 10 angehoben oder abgesenkt. Hierzu kommt eine Regeleinrichtung zum Einsatz. Die Regelgröße der Regelung stellt somit die Hubstellung des ersten Arbeitsgeräts 2 gegenüber dem ersten Tragelement 11 dar, welche durch die gemessenen Winkel der Winkelsensoren wiedergegeben wird. Auf die Regelgröße wirkt die Störgröße in Form des sich verändernden Bodenprofils ein, da das erste Arbeitsgerät 2 frei verschwenkbar am ersten Tragelement 11 dem Bodenprofil folgt. Als Stellgröße werden die Unterlenker 9, 10 in ihrer Höhenstellung verändert.

Ferner lassen sich durch die Winkelsensoren an zwei zueinander beabstandeten ersten Armen 15 Rollbewegungen des ersten Arbeitsgeräts 2 gegenüber dem ersten Tragelement 11 ermitteln. Um einen Soll-Rollwinkel des ersten Arbeitsgeräts 2 gegenüber dem ersten Tragelement 11 anzusteuern, werden die Unterlenker 9, 10 in Abhängigkeit von den gemessenen Winkeln an den ersten Armen 15 unabhängig voneinander in Höhenstellungen gesteuert, in welchen das erste Arbeitsgerät 2 den Soll-Rollwinkel einnimmt.

Ferner kann ein Sensor für die Nickbewegung vorgesehen sein, wobei zur Erreichung eines Soll-Nickwinkels des ersten Arbeitsgeräts 2 relativ zum ersten Tragelement 11 die Länge des Oberlenkers 12 verstellt wird.

Ebenso können die Hubstellungen des zweiten Arbeitsgeräts 3 und des dritten Arbeitsgeräts 4 ermittelt werden, um auf die jeweilige Anbauvorrichtung 7, 8 einzuwirken.

Da das erste Arbeitsgerät 2, das zweite Arbeitsgerät 3 und das dritte Arbeitsgerät 4 in Arbeitsrichtung 5 betrachtet hintereinander angeordnet sind, können die Messwerte, welche die Hubstellungen, die Rollwinkel sowie die Nickwinkel des vordersten ersten Arbeitsgerätes 2 wiederspiegeln, an Regeleinrichtungen der zweiten und dritten Anbauvorrichtung 7, 8 geleitet werden, so dass frühzeitig Stellgrößen auf die zweite und dritte Anbauvorrichtung 7, 8 einwirken können, bevor Sensoren am zweiten oder dritten Arbeitsgerät 3, 4 eine Abweichung der Ist-Werte von den SollWerten ermitteln.

### Bezugszeichenliste

- 1: Schlepper
- 2: erstes Arbeitsgerät
- 3: zweites Arbeitsgerät
- 4: drittes Arbeitsgerät
- 5: Arbeitsrichtung
- 6: erste Anbauvorrichtung
- 7: zweite Anbauvorrichtung
- 8: dritte Anbauvorrichtung
- 9: Unterlenker
- 10: Unterlenker
- 11: erstes Tragelement
- 12: Oberlenker
- 13, 13', 13": Rollachse
- 14, 14': Nickachse
- 15: erster Arm
- 16: erste Federanordnung
- 17: zweiter Arm
- 18: dritter Arm
- 19: zweites Tragelement
- 20: drittes Tragelement
- 21: zweite Federanordnung
- 22: dritte Federanordnung

## Patentansprüche

1. Vorrichtung zum Regeln der Position eines Arbeitsgeräts, insbesondere eines Mähwerks, relativ zu einem Trägerfahrzeug (1), insbesondere einem Traktor, umfassend
- das Arbeitsgerät (2, 3, 4),
- das in einer Arbeitsrichtung (5) in vorbestimmter Höhe dem Boden folgend von dem Trägerfahrzeug (1) über den Boden bewegbar ist,
- ein Tragelement (11, 19, 20),
- an das das Arbeitsgerät (2, 3, 4) angekoppelt ist und
- das an das Trägerfahrzeug (1) anbaubar ist,
- eine Kuppelvorrichtung (15, 17, 18),
- mittels der das Arbeitsgerät (2, 3, 4) mit dem Tragelement (11, 19, 20) verbunden ist und
- mittels der sich das Arbeitsgerät (2, 3, 4) in Abhängigkeit von dem Höhenverlauf des Bodens vertikal frei in seiner entsprechenden Hubstellung relativ zum Tragelement (11, 19, 20) einstellt,
- eine Anbauvorrichtung (6, 7, 8),
- mittels der das Tragelement (11, 19, 20) an das Trägerfahrzeug (1) anbaubar ist und
- die eine Hubvorrichtung zum Anheben und Absenken des Tragelements (11, 19, 20) aufweist,
- einen Sensor,
- der die jeweilige Ist-Hubstellung des Arbeitsgeräts (2, 3, 4) relativ zum Tragelement (11, 19, 20) ermittelt, sowie
- eine Regeleinrichtung,
- die die Abweichung der Ist-Hubstellung von einer vorbestimmten Soll-Hubstellung des Arbeitsgeräts (2, 3, 4) relativ zum Trageelement (11, 19, 20) ermittelt und
- die mittels der Hubvorrichtung das Tragelement (11, 19, 20) zu einer Höhenposition steuert, in der das Arbeitsgerät (2, 3, 4) die Soll-Hubstellung einnimmt.

2. Vorrichtung nach Anspruch 1,
**dadurch gekennzeichnet,**
**dass** das Arbeitsgerät (2, 3, 4) mit einer Gleitfläche auf dem Boden aufliegt und über diesen bewegbar ist.

3. Vorrichtung nach Anspruch 2,
**dadurch gekennzeichnet,**
**dass** zur Einstellung der Auflagekraft des Arbeitsgeräts (2, 3, 4) auf dem Boden eine Federanordnung (16, 21, 22) vorgesehen ist, welche das Arbeitsgerät (2, 3, 4) im Hubsinne mit Kraft beaufschlagt.

4. Vorrichtung nach einem der Ansprüche 1 bis 3,
**dadurch gekennzeichnet,**
**dass** die Kuppelvorrichtung mindestens einen Arm (15, 17, 18) aufweist, der einerseits gelenkig mit dem Tragelement (11, 19, 20) und andererseits gelenkig mit dem Arbeitsgerät (2, 3, 4) verbunden ist, und
**dass** der Sensor einen Winkelsensor umfasst, der die Winkelstellung des Arms (15, 17, 18) relativ zum Tragelement (11, 19, 20) ermittelt.

5. Vorrichtung nach einem der Ansprüche 1 bis 4,
**dadurch gekennzeichnet,**
**dass** die Anbauvorrichtung (6) eine Dreipunktkupplung mit zwei Unterlenkern (9, 10) und einem Oberlenker (12) ist.

6. Vorrichtung nach Anspruch 5,
**dadurch gekennzeichnet,**
**dass** das Arbeitsgerät (2, 3, 4) in Abhängigkeit von dem Verlauf des Bodens quer zur Arbeitsrichtung (5) frei zum Tragelement (11, 19, 20) um eine Rollachse (13, 13', 13"), welche in Arbeitsrichtung (5) ausgerichtet ist, schwenkbar ist.

7. Vorrichtung nach Anspruch 6,
**dadurch gekennzeichnet,**
**dass** ein Rollwinkelsensor vorgesehen ist, der die Ist-Rollwinkelstellung des Arbeitsgeräts (2) relativ zum Tragelement (11) ermittelt, und
**dass** die Regeleinrichtung die Abweichung der Ist-Rollwinkelstellung von einer vorbestimmten Soll-Rollwinkelstellung des Arbeitsgeräts (2) ermittelt und mittels der Hubvorrichtung die Unterlenker (9, 10) jeweils in eine voneinander unabhängige Höhenposition steuert, in der das Tragelement (11) eine Stellung einnimmt, in der das Arbeitsgerät (2) die Soll-Rollwinkelstellung einnimmt.

8. Vorrichtung nach Anspruch 7,
**dadurch gekennzeichnet,**
**dass** die Kuppelvorrichtung zwei Arme (15) aufweist, die jeweils einerseits gelenkig mit dem Tragelement (11) und andererseits gelenkig mit dem Arbeitsgerät (2) verbunden sind, und **dass** der Rollenwinkelsensor zwei Winkelsensoren umfasst, die die Winkelstellung der Arme (15) relativ zum Tragelement (11) ermitteln.

9. Vorrichtung nach einem der Ansprüche 1 bis 8,
**dadurch gekennzeichnet,**
**dass** das Arbeitsgerät (2, 3, 4) in Abhängigkeit von dem Verlauf des Bodens frei zum Tragelement (11, 19, 20) um eine Nickachse (14, 14'), welche quer zur Arbeitsrichtung (5) ausgerichtet ist, schwenkbar ist.

10. Vorrichtung nach Anspruch 5 und 9,
**dadurch gekennzeichnet,**
**dass** ein Nickwinkelsensor vorgesehen ist, der die jeweilige Ist-Nickwinkelstellung des Arbeitsgeräts (2) relativ zum Tragelement (11) ermittelt, und
**dass** die Regeleinrichtung die Abweichung der Ist-Nickwinkelstellung von einer vorbestimmten Soll-Nickwinkelstellung ermittelt und mittels einer Vorrichtung zum Einstellen der Länge des Oberlenkers (12) das Tragelement (11) zu einer Stellung steuert, in der das Arbeitsgerät (2) die Soll-Nickwinkelstellung einnimmt.

11. Arbeitsmaschine mit mindestens zwei Vorrichtungen gemäß einem der Ansprüche 1 bis 10,
**dadurch gekennzeichnet,**
**dass** die Arbeitsgeräte (2, 3, 4) der Vorrichtungen in Arbeitsrichtung betrachtet hintereinander angeordnet sind und
**dass** die Regeleinrichtungen der Vorrichtungen miteinander derart verbunden sind, dass ein Signal, welches der Ist-Hubstellung des in Arbeitsrichtung (5) vordersten Arbeitsgeräts (2) entspricht, an die Regeleinrichtungen der dahinter angeordneten Vorrichtungen geleitet wird.

12. Arbeitsmaschine mit mindestens zwei Vorrichtungen gemäß Anspruch 11,
**dadurch gekennzeichnet,**
**dass** die Regeleinrichtungen der Vorrichtungen miteinander derart verbunden sind, dass ein Signal, welches der Ist-Rollwinkelstellung des in Arbeitsrichtung vordersten Arbeitsgeräts (2) entspricht, an die Regeleinrichtungen der dahinter angeordneten Vorrichtungen geleitet wird.

13. Arbeitsmaschine mit mindestens zwei Vorrichtungen gemäß einem der Ansprüche 11 oder 12,
**dadurch gekennzeichnet,**
**dass** die Regeleinrichtungen der Vorrichtungen miteinander derart verbunden sind, dass ein Signal, welches der Ist-Nickwinkelstellung des in Arbeitsrichtung vordersten Arbeitsgeräts (2) entspricht, an die Regeleinrichtungen der dahinter angeordneten Vorrichtungen geleitet wird.

## Claims

1. A device for controlling the position of an implement, more particularly of a mower, relative to a carrier vehicle (1), more particularly a tractor, comprising
- the implement (2, 3, 4)
which, in a working direction (5), at a predetermined level from the ground, can be moved by the carrier vehicle (1) over the ground;
- a support element (11, 19, 20),
to which the implement (2,34) is coupled
and which can be attached to the carrier vehicle (1);
- a coupling device (15, 17, 18)
by means of which the implement (2, 3, 4) is coupled to the support element (11, 19, 20) and
by mean of which the implement (2, 3 4), as a function of the height profile of the ground, is set vertically freely in its respective position of lift relative to the support element (11, 19, 20);
- an attaching device (6, 7 8)
by means of which the support element (11, 19, 10) can be attached to the carrier vehicle (1) and which comprises a lifting device for raising and lowering the support element (11, 19, 20),
- a sensor
which determines the respective actual position of lift of the implement (2, 3 4) relative to the support element (11, 19, 20), as well as
- a control unit
which determines the deviation of the actual position of lift from the predetermined nominal position of lift of the implement (2, 3, 4) relative to the support element (11, 19, 20), and
which, by means of the lifting device, controls and moves the support element (11, 19, 20) up to a level in which the implement (2, 3, 4) assumes the nominal position of lift.

2. A device according to claim 1,
**characterised in**
**that** the implement (2, 3, 4) rests on the ground by means of a sliding face and is movable along the ground.

3. A device according to claim 2,
**characterised in**
**that** for setting the contact force of the implement (2, 3, 4) on the ground, there is provided a spring assembly (16, 21, 22) which force-loads the implement (2, 3, 4) in the lifting direction.

4. A device according to any one of claims 1 to 3,
**characterised in**
**that** the coupling device comprises at least one arm (15, 17, 18) which, on the one hand, is articulatably connected to the support element (11, 19, 20) and which, on the other hand, is articulatably connected to the implement (2, 3, 4), and
**that** the sensor comprises an angle sensor which determines the angular position of the arm (15, 17, 18) relative to the support element (11, 19, 20).

5. A device according to any one of claims 1 to 4,
**characterised in**
**that** the attaching device (6) constitutes a three-point hitch with two lower links (9, 10) and one upper link (12).

6. A device according to claim 5,
**characterised in**
**that**, as a function of the ground profile, the implement (2, 3, 4) can be pivoted transversely to the working direction (5) and freely relative to the support element (11, 19, 20) around a roll axis (13, 13', 13") which is aligned so as to extend in the working direction (5).

7. A device according to claim 6,
**characterised in**
**that** there is provided a roll angle sensor which determines the actual roll angle position of the implement (2) relative to the support element (11) and
**that** the control unit determines the deviation of the actual roll angle position from a predetermined nominal roll angle position of the implement (2) and, by means of the lifting device, controls and moves the lower links (9, 10) into positions of lift which are independent of one another, in which the support element (11) assumes a position in which the implement (2) assumes the nominal roll angle position.

8. A device according to claim 7,
**characterised in**
**that** the coupling device comprises two arms (15) which, on the one hand, are articulatably connected to the support element (11) and which, on the other hand, are articulatably connected to the implement (2), and that the roll angle sensor comprises two angle sensors which determine the angular position of the arms (15) relative to the support element (11).

9. A device according to any one of claims 1 to 8,
**characterised in**
**that**, as a function of the ground profile, the implement (2, 3, 4) can be pivoted freely relative to the support element (11, 19, 20) around a pitch axis (14, 14') which is aligned so as to extend transversely to the working direction (5).

10. A device according to claims 5 and 9,
**characterised in**
**that** there is provided a pitch angle sensor which determines the respective actual pitch angle position of the implement (2) relative to the support element (11) and
**that** the control unit determines the deviation of the actual pitch angle position from a predetermined nominal pitch angle position and, by means of a device for setting the length of the upper link (12), controls and moves the support element (11) into a position in which the implement (2) assumes the nominal pitch angle position.

11. A machine having at least two devices according to any one of claims 1 to 10,
**characterised in**
**that** the implements (2, 3, 4) of the devices - if viewed in the working direction - are arranged one behind the other and
**that** the control units of the devices are connected to one another in such a way that a signal corresponding to the actual position of lift of the implement (2) in the very front, if viewed in the working direction (5), is transmitted to the control units of the devices arranged therebehind.

12. A machine having at least two devices according to claim 11,
**characterised in**
**that** the control units of the devices are connected to one another in such a way that a signal corresponding to the actual roll angle position of the implement (2) in the very front, if viewed in the working direction, is transmitted to the control units of the devices arranged therebehind.

13. A machine having at least two devices according to any one of claims 11 or 12,
**characterised in**
**that** the control units of the devices are connected to one another in such a way that a signal corresponding to the actual pitch angle position of the implement (2) in the very front, if viewed in the working direction, is transmitted to the control units of the devices arranged therebehind.

## Revendications

1. Dispositif pour réguler la position d'un appareil de travail, en particulier d'un mécanisme de moissonnage, par rapport à un véhicule de support (1), en particulier un tracteur, comprenant
- l'appareil de travail (2, 3, 4)
- qui est déplaçable par le véhicule de support (1) par-dessus le sol dans une direction de travail (5) en suivant le sol à une hauteur prédéterminée,
- un élément porteur (11, 19, 20),
- qui est accouplé à l'appareil de travail (2, 3, 4) et
- qui est rapportable sur le véhicule de support (1),
- un dispositif d'accouplement (15, 17, 18)
- au moyen duquel l'appareil de travail (2, 3, 4) est relié à l'élément porteur (11, 19, 20), et
- au moyen duquel l'appareil de travail (2, 3, 4) s'ajuste verticalement librement dans sa position de levage correspondante par rapport à l'élément porteur (11, 19, 20) en fonction du profil en hauteur du sol,
- un dispositif de montage (6, 7, 8)
- au moyen duquel l'élément porteur (11, 19, 20) est rapportable sur le véhicule de support (1), et
- qui comprend un dispositif de levage pour lever et abaisser l'élément porteur (11, 19, 20),
- un détecteur
- qui détecte la position de levage respective réelle de l'appareil de travail (2, 3, 4) par rapport à l'élément porteur (11, 19, 20), et
- un système de régulation
- qui détecte l'écart de la position de levage réelle par rapport à une position de levage de consigne prédéterminée de l'appareil de travail (2, 3, 4) par rapport à l'élément porteur (11, 19, 20), et
- qui, au moyen du dispositif de levage, commande l'élément porteur (11, 19, 20) vers une position en hauteur dans laquelle l'appareil de travail (2, 3, 4) occupe la position de levage de consigne.

2. Dispositif selon la revendication 1,
**caractérisé en ce que**
l'appareil de travail (2, 3, 4) repose par une surface de glissement sur le sol et est déplaçable par-dessus celui-ci.

3. Dispositif selon la revendication 2,
**caractérisé en ce que**
pour régler la force d'appui de l'appareil de travail (2, 3, 4) sur le sol, il est prévu un agencement à ressort (16, 21, 22) qui sollicite l'appareil de travail (2, 3, 4) par une force dans le sens d'un levage.

4. Dispositif selon l'une des revendications 1 à 3,
**caractérisé en ce que**
le dispositif d'accouplement comprend au moins une branche (15, 17, 18) qui est reliée d'une part en articulation à l'élément porteur (11, 19, 20) et d'autre part en articulation à l'appareil de travail (2, 3, 4), et
**en ce que** le détecteur comprend un capteur d'angle qui détecte la position angulaire de la branche (15, 17, 18) par rapport à l'élément porteur (11, 19, 20).

5. Dispositif selon l'une des revendications 1 à 4,
**caractérisé en ce que**
le dispositif de montage (6) est un accouplement à trois points comportant deux bras inférieurs (9, 10) et un bras supérieur (12).

6. Dispositif selon la revendication 5,
**caractérisé en ce que**
l'appareil de travail (2, 3, 4) est mobile en pivotement autour d'un axe de roulis (13, 13', 13") orienté en direction de travail (5), en fonction du profil du sol, transversalement à la direction de travail (5) et librement par rapport à l'élément porteur (11, 19, 20).

7. Dispositif selon la revendication 6,
**caractérisé en ce que**
il est prévu un capteur d'angle de roulis qui détecte la position d'angle de roulis réelle de l'appareil de travail (2) par rapport à l'élément porteur (11), et
**en ce que** le système de régulation détecte l'écart de la position d'angle de roulis réelle par rapport à une position d'angle de roulis de consigne prédéterminée de l'appareil de travail (2) et il commande, au moyen du dispositif de levage, les bras inférieurs (9, 10) chacun dans une position en hauteur mutuellement indépendante dans laquelle l'élément porteur (11) occupe une position dans laquelle l'appareil de travail (2) occupe la position d'angle de roulis de consigne.

8. Dispositif selon la revendication 7,
**caractérisé en ce que**
le dispositif d'accouplement comprend deux branches (15) qui sont reliées chacune d'une part en articulation à l'élément porteur (11) et d'autre part en articulation à l'appareil de travail (2), et
**en ce que** le capteur d'angle de roulis comprend deux capteurs d'angle qui détectent la position angulaire des branches (15) par rapport à l'élément porteur (11).

9. Dispositif selon l'une des revendications 1 à 8,
**caractérisé en ce que**
l'appareil de travail (2, 3, 4) est mobile en pivotement autour d'un axe de tangage (14, 14') orienté transversalement à la direction de travail (5), en fonction du profil du sol, librement par rapport à l'élément porteur (11, 19, 20).

10. Dispositif selon les revendications 5 et 9,
**caractérisé en ce que**
il est prévu un capteur d'angle de tangage qui détecte la position d'angle de tangage respective réelle de l'appareil de travail (2) par rapport à l'élément porteur (11), et
**en ce que** le système de régulation détecte l'écart de la position d'angle de tangage réelle par rapport à une position d'angle de tangage de consigne prédéterminée et il commande, au moyen d'un dispositif destiné à régler la longueur du bras supérieur (12), l'élément porteur (11) vers une position dans laquelle l'appareil de commande (2) occupe la position d'angle de tangage de consigne.

11. Machine de travail comportant au moins deux dispositifs selon l'une des revendications 1 à 10,
**caractérisée en ce que**
les appareils de travail (2, 3, 4) des dispositifs sont agencés les uns derrière les autres, observés en direction de travail, et
**en ce que** les systèmes de régulation des dispositifs sont connectés entre eux de telle sorte qu'un signal qui correspond à la position de levage réelle de l'appareil de travail (2) le plus en avant en direction de travail (5) est acheminé aux systèmes de régulation des dispositifs agencés en arrière.

12. Machine de travail comportant aux moins deux dispositifs, selon la revendication 11,
**caractérisée en ce que**
les systèmes de régulation des dispositifs sont connectés entre eux de telle sorte qu'un signal qui correspond à la position d'angle de roulis réelle de l'appareil de travail (2) le plus en avant en direction de travail est acheminé aux systèmes de régulation des dispositifs agencés en arrière.

13. Machine de travail comportant au moins deux dispositifs, selon l'une des revendications 11 ou 12,
**caractérisée en ce que**
les systèmes de régulation des dispositifs sont connectés entre eux de telle sorte qu'un signal qui correspond à la position d'angle de tangage réelle de l'appareil de travail (2) le plus en avant en direction de travail est acheminé aux systèmes de régulation des dispositifs agencés en arrière.
